# EUROPEAN PATENT SPECIFICATION

(11) **EP 4 732 244 B1**
(45) Date of publication and mention of the grant of the patent: **07.10.2026**
(21) Application number: 24730708.5
(22) Date of filing: 06.06.2024
(51) Int. Cl.: G06T 12/10, G06T 5/70

(54) **DE-NOISING IN SPECTRAL CT**
ENTRAUSCHEN IN SPEKTRALER CT
DÉBRUITAGE DANS UNE TOMOGRAPHIE SPECTRALE PAR ORDINATEUR

(30) Priority: 23.06.2023 EP 23181266
(43) Date of publication of application: 29.04.2026
(73) Proprietor: Koninklijke Philips N.V., 5656 AE Eindhoven (NL)
(72) Inventor: SHECHTER, Gilad, 5656 AG Eindhoven (NL)
(74) Representative: Philips Intellectual Property & Standards
(86) International application number: PCT/EP2024/065569
(87) International publication number: WO 2024/260736

(56) References cited:
- US-A1- 2015 279 005
- US-B2- 10 573 028

## Description

### FIELD OF THE INVENTION

The present application relates to de-noising in spectral CT imaging.

### BACKGROUND OF THE INVENTION

The following generally relates to projection data de-noising and is described with particular application to photon counting spectral computed tomography (CT).

A CT scanner includes an x-ray tube that emits radiation that traverses an examination region and an object therein. A detector array located opposite the examination region across from the x-ray tube detects radiation that traverses the examination region and the object therein and generates projection data indicative of the examination region and the object therein. A reconstructor processes the projection data and reconstructs volumetric image data indicative of the examination region and the object therein.

Photon counting CT (PCCT) systems offer a superior spatial resolution as well as better spectral separation compared to use of (the more standard) scintillator detectors operated in integrating mode. In photon counting CT, a multi-energy projection dataset is acquired which effectively comprises multiple projection data subsets, generated by a photon-counting detector which is able to simultaneously obtain measurement counts of incoming photons at two or more different energy levels or bands, and therefore enables acquisition of more spectral information in a single scan.

A photon counting detector comprises a 1D or 2D array of detector elements (or detector pixels), each of which is capable of spectrally discriminating incoming x-ray photons and of counting received photons of different energies. In particular, each detector element has counting electronics which allow the filling of each x-ray event (meaning incidence of a particular x-ray photon) into one of N adjacent energy bins according to the energy of the incoming photon.

Based on these multiple projection data subsets, physical object properties can be determined locally, by decomposing different component contributions to the x-ray attenuation (e.g., photoelectric effect, Compton scattering, water content, bone content, iodine content, etc.). The determination of these properties is called basis component decomposition. Where material composition is being investigated, this technique may be known as basis material decomposition. Two possible approaches for the decomposition are the decomposition in image domain and the decomposition in projection domain.

For image domain decomposition, an image is reconstructed for each acquired projection data subset, and the decomposition is performed on the reconstructed images, converting the reconstructed voxel values for one image location into material values. However, this approach tends to lead to image artifacts and biased material concentration values caused due to the beam hardening effect. For projection domain decomposition, the decomposition is performed by converting the 'measured line integrals' for each ray (i.e. the detector readings) into 'basis material line integrals' (i.e. the decomposed values). The basis material line integrals are then reconstructed to generate basis material images.

However, as a consequence of projection domain decomposition, the noise of the measured projection data might be strongly magnified, and streak artefacts may be introduced. For the special case of only two basis components, this magnified noise is highly negatively-correlated for the two different basis line integrals of one acquisition ray. The increase of this correlated noise depends on the total attenuation along the given ray and can therefore be enhanced in specific locations of the sinogram of all ray paths.

This is demonstrated in Tkaczyk et al., "Quantization of liver tissue in Dual kVp computed tomography using linear discriminant analysis," Proc. of SPIE, 7258, pp 72580G1-72580G 12, (2009), which shows that using two monochromatic spectra, when the energy dependence of the basis material attenuation profiles becomes similar or when the energy separation between the used spectra becomes small, the noise of the basis material line integrals of the same ray path can strongly increase and negatively correlate. The same phenomenon occurs for multi-energy polychromatic spectra.

The negatively correlated noise (between a pair of sinograms of different energies) in the projection domain leads to so-called noise-induced bias (NIB) in the decomposed sinograms and resulting reconstructed images. In particular, the decomposition algorithms are non-linear, so that noise is magnified in the decomposed sinograms. This can lead to streak artifacts in the reconstructed images. As a result, if images are directly reconstructed from the basis material line integrals, the basis material images can be noisy due to the noise amplification, which may reduce the clinical and/or diagnostic value of the basis material images. The correlated noise may also propagate to monochromatic images and reduce the spectral information contrast to noise ratio (CNR) for spectral applications.

The correlated noise may be referred to as negatively correlated noise or anti-correlated noise. Both terms are used in the art.

A motivation behind the making of the present invention was a desire for improved methods to reduce the streaks of negatively correlated noise which arises in projection-domain decomposition for low counts.

Patent US 10573028B2 discloses a filter for multiple level energy computed tomography (CT), wherein a first and second material decomposed (MD) images are obtained, and wherein the filter is guided by first and second guide images each obtained by mixing first and second MD images according to a first and second mixing process, respectively.

Patent application US2015/279005A1 discloses a projection domain noise filter to remove correlated noise from spectral or multi-energy projection data, based on variances of the basis material line integrals and a covariance there between, based on multiple correlation coefficients and hyper-planes that describe the noise correlation between different basis material line integrals.

### SUMMARY OF THE INVENTION

The invention is defined by the claims.

The aim of this invention is to reduce artefacts originating due to negatively correlated noise (anti-correlated noise) through improved smoothing of low-count readings in the projection domain.

A decomposition algorithm is configured to receive as input multi-energy projection data values and provide as output decomposed data values. The reliability of the decomposition can reduce for input values which are low. In particular, anti-correlated noise can be higher for input count values which are lower.

According to one or more embodiments, there is provided a method for use in reducing anti-correlated noise in decomposed spectral CT projection data, the decomposed spectral CT projection data being spectral CT projection data to which a pre-determined decomposition algorithm has been applied, and the anti-correlated noise being a noise component of the decomposed spectral CT projection data which arises upon application of the decomposition algorithm, the method comprising:
obtaining a multi-energy photon counting CT projection dataset comprising a respective set of detection count readings for a set of energy bins, for each of an array of detector elements;
identifying low-count reading sets by identifying sets of detection count readings for which the sum of the detection count readings across the bins is below a pre-defined threshold;
retrieving a pre-computed reliability index for each identified low-count reading set, the reliability index corresponding to a pre-computed theoretical probability of obtaining the particular set of detector bin count values in the reading set;
retrieve and apply a smoothing operator to the multi-energy photon counting CT projection dataset, the smoothing operator applied to the identified low count reading sets, wherein the strength of the smoothing operator for each reading set is adjusted in dependence upon the reliability index derived for the reading set, with stronger smoothing applied for lower reliability reading sets.

It is known to reduce low-count related artefacts by applying a smoothing filter to all count values which are below a certain threshold. This method outlined above proposes a more discriminatory filtering process, wherein low count readings are categorized according to their relative reliability, based on pre-computed probability distributions.

In some embodiments, the reliability index may comprise a product of a first and second component. The first component may comprise the said pre-computed theoretical probability of obtaining the particular set of detector bin count values in the reading set. The second component may comprise a pre-computed reliability variable, indicative of a pre-determined plausibility of a decomposed value set obtained when said pre-determined decomposition algorithm is applied to the reading set.

In some embodiments, the second component may have a value of 1 for low count readings whose corresponding decomposed value set is within a pre-defined plausibility range, and may have a value of 0 for low count readings whose corresponding decomposed value set is outside of the pre-defined range.

In some embodiments, the probability distribution may be derived based on application of the decomposition algorithm to low count reading sets to obtain corresponding decomposed readings, and a further reverse application of the decomposition algorithm to the obtained decomposed readings to derive theoretical detector count readings based on the decomposed values.

In some embodiments, the method may further comprise applying the pre-determined decomposition algorithm to the smoothed projection dataset.

In some embodiments, the method may further comprise applying a reconstruction algorithm to obtain reconstructed image data.

A further aspect of the invention provides a computer program product comprising computer program code configured, when run on a processor, to cause the processor to perform a method in accordance with any example or embodiment described in this disclosure.

A further aspect of the invention provides a processing arrangement, comprising: an input for obtaining a multi-energy CT projection dataset and one or more processors adapted to perform a method in accordance with any example or embodiment described in this disclosure on the obtained multi-energy CT projection dataset.

A further aspect of the invention provides a photon-counting CT system comprising the before-mentioned processing arrangement. In this case the projection dataset can be obtained from the photon-counting CT system itself.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows an example CT imaging apparatus;
Fig. 2 illustrates a problem of low-count induced artefacts within a reconstructed image;
Fig. 3 further illustrates the problem of low-count induced artefacts within a reconstructed image;
Fig. 4 shows a block diagram of steps of an example method according to at least one embodiment;
Fig. 5 shows a pre-computed field of decomposed value sets which are of acceptable reliability;
Fig. 6 and Fig. 7 show frequency distributions of low count readings in two sample sinograms according to their reliability index, whereby it is shown that more reliable readings occur more frequently in the sinograms;
Fig. 8 shows a further example method with additional pre-processing and post-processing steps; and
Fig. 9 shows an example system in accordance with one or more embodiments.

### DETAILED DESCRIPTION OF THE EMBODIMENTS

The invention will be described with reference to the Figures.

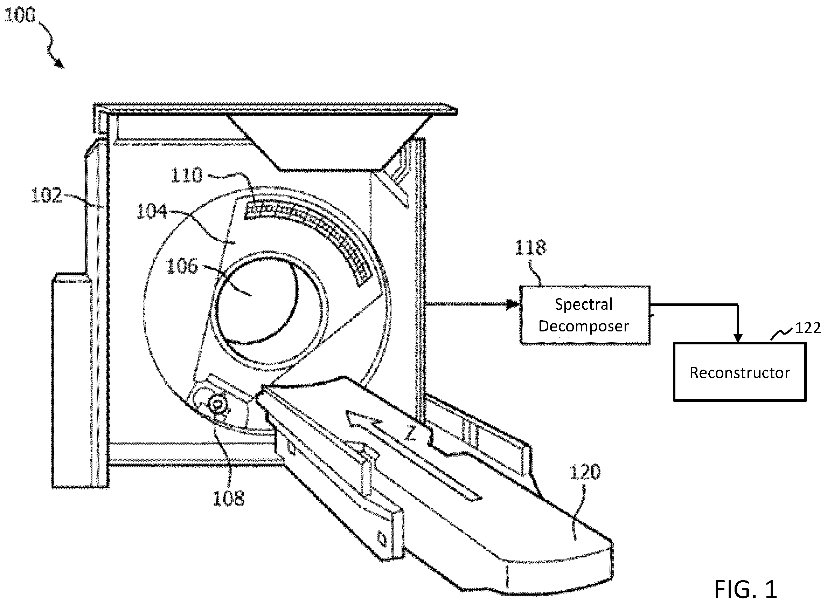

By way of introduction, Fig. 1 illustrates an example computed tomography (CT) imaging apparatus.

A radiation source 108, such as an x-ray tube, is rotatably supported by the rotating gantry 104. The radiation source 108 rotates with the rotating gantry 104 and emits radiation that traverses the examination region 106. A subject support 120, such as a couch, supports an object or subject in the examination region 108.

A radiation sensitive detector array 110 subtends an angular arc opposite the radiation source 110 across the examination region 106. The detector array 110 includes one or more rows of detectors that extend along the z-axis direction. The detector array 110 detects radiation traversing the examination region 106 and generates projection data (sometimes known as measured line integrals) indicative thereof.

In the illustrated example, the projection data is spectral/multi-energy projection data. As used herein, spectral/multi-energy projection data is projection data that includes at least two sub-sets of projection data, each representing attenuation properties of the scanned object for different X-ray spectra. The projection data thus comprises a set of detection or measurement values for each detector element of the detector array 110. Such projection data can be obtained by detecting energy at multiple energy levels, as in this invention by a photon counting detector.

A spectral decomposer 118 decomposes the acquired spectral/multi-energy projection data, producing decomposed spectral/multi-energy projection data, or basis material / basis component line integrals. In particular, each measured line integral can be decomposed into a linear sum of two or more basis component/material line integrals with corresponding coefficients. The decomposition can be based on two or more basis components such as the photoelectric effect, Compton scattering, water content, bone content, iodine content, a k-edge, and/or other basis components.

The decomposed projection data may be passed to a reconstructor 122.

The reconstructor 122 may employ a filtered-backprojection (FBP) reconstruction, a (image domain and/or projection domain) reduced noise reconstruction algorithm (e.g., an iterative reconstruction) and/or other algorithm. It is to be appreciated that the reconstruction apparatus 122 can be implemented through a microprocessor(s), which executes a computer readable instruction(s) encoded or embed on computer readable storage medium such as physical memory and other non-transitory medium. Additionally or alternatively, the microprocessor(s) can execute a computer readable instruction(s) carried by a carrier wave, a signal and other transitory (or non, non-transitory) medium.

Embodiments of the invention provide improved reduction of artefacts due to a negatively correlated noise (anticorrelated noise) artefacts in spectral CT imaging. This comprises detecting photon detector counts which are below a certain threshold (low count readings) and then determining a reliability index for each sinogram voxel having a detected set of low count readings. Those readings in the sinogram being below a threshold reliability are operated upon with a smoothing operator. The reliability index is based on a pre-computed probability distribution of different possible sets of detection count readings, the probability distribution based on a theoretical probability of each combination of reading counts given an assumed attenuation profile of the scanned body.

The invention thus provides a low-count correction procedure permitting reduction of streaks of negatively correlated noise (anti-correlated noise) through improved smoothing of low-count readings in the projection domain in the case of photon-counting CT systems, in which acquired projection data comprises photon count data for each detector element for each of a set of energy bins. A decomposition algorithm is configured to receive as input multi-energy projection data values and provide as output decomposed data values. The reliability of the decomposition can reduce for input values which are low. In particular, anti-correlated noise can be higher for input count values which are lower. In addition, noise in non-spectral images can also be higher for low-count values. This arises from the fact that, for low count readings, the standard error is comparable in magnitude to the readings themselves, leading to a low degree of reliability.

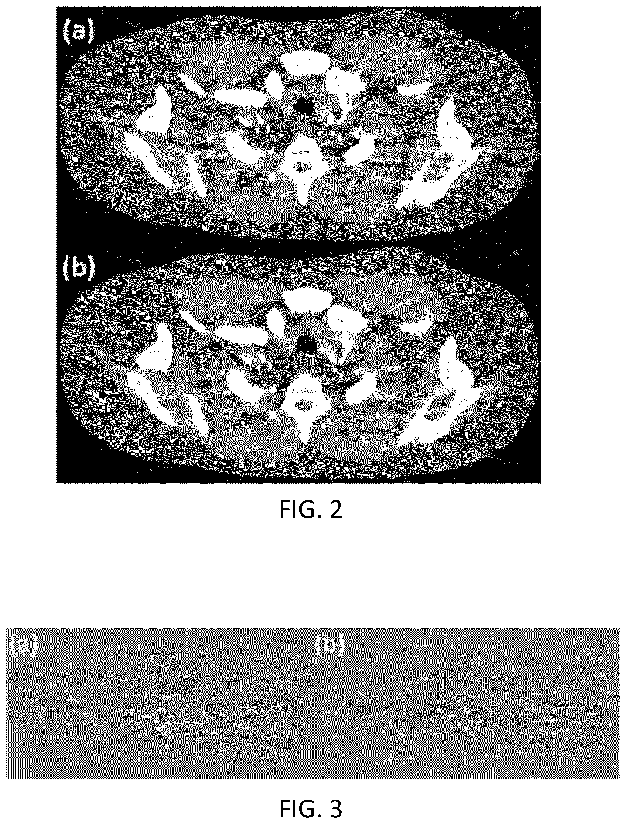

The problem addressed by embodiments described hereinbelow is illustrated in Fig. 2 and Fig. 3. Fig. 2(a) shows an example CT photo image without low count correction applied. Fig. 2(b) shows the same CT image after the low count correction of the method described below has been applied. Horizontal streak artefacts are present in (a), whereas the streaks are reduced in (b). Fig. 3 illustrates application of the low-count correction method. In particular, three scatter images (i.e. spectral images formed from the scatter component of a decomposed spectral dataset) are used, from which two difference images are generated. The first image is an image obtained without the low-count correction, as in Fig. 2(a). The second image is an image obtained using a standard low-count smoothing method in which all low-count readings are smoothed. The third image is that obtained after application of the low-count correction method of the present application, i.e. in which only low-count readings having a low reliability index are smoothed. Fig. 3(a), shows the second image subtracted from the first image. Fig, 3(b) shows the third image subtracted from the first image. In Fig. 3(a), clear bone residuals are obtained illustrating a loss of spatial resolution resulting from smoothing all the low-count readings. In Fig. 3(b), these residuals are not present, illustrating the fact that the low-count correction method of the present application avoids loss of resolution.

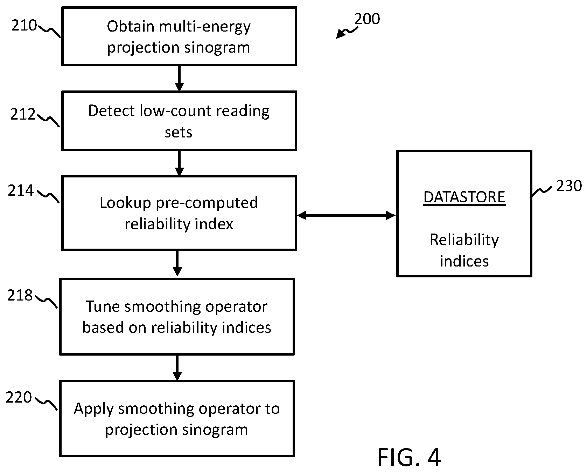

Fig. 4 outlines the steps of an example method in accordance with one or more embodiments. The steps of the method will first be outlined in summary, before a more detailed explanation is provided.

The method comprises obtaining 210 a multi-energy projection dataset for a scanned body comprising a respective set of photon count readings for a set of energy bins for each of an array of detector elements.

The method further comprises identifying 212 low-count reading sets by identifying sets of detection count readings for which the sum of the detection count reading set is below a threshold. A given set of detection count readings may be expressed as *c*(*b*), where the index *b* runs over the set of energy bins that each detector element is operable to obtain counts for. This step may be understood as identifying count reading sets for which the following condition is true: ${\sum }_{b = 1}^{{n}_{b}} c \left(b\right) < {T}_{low - count}$ (1) where n_{b} is the total number of energy bins and T_{low-count} is the threshold cumulative sum of counts below which the reading set is classified as a low count reading.

The method further comprises retrieving 214 a pre-computed reliability index for each identified low-count reading set, the reliability index corresponding to a pre-computed theoretical probability of obtaining the particular set of detector bin count values in the reading set. This may be retrieved from a datastore 230.

The method further comprises retrieving and tuning 218 parameters of a smoothing operator, wherein the parameters of the smoothing operator for each reading set are configured in dependence upon the reliability index derived for the reading set.

The method further comprises applying 220 the smoothing operator to the multi-energy projection dataset, the smoothing operator applied only to the identified low count reading sets.

Thus this method is based on smoothing low-count readings in a photon count detector projection dataset, wherein the smoothing is adapted according to a reliability index derived for each low count reading, the reliability index being based on a pre-computed probability distribution.

As compared with simply smoothing all low count readings, the selective and adaptive smoothing method proposed here avoids visible smearing of the image. This is illustrated by Fig. 3 already discussed.

The steps of the method will now be explained in greater detail.

According to a preferred set of embodiments, the reliability index mentioned above is formed of two parts: a first reliability index part (which might be referred to as a non-statistical reliability index part); and a second, variable index part (which might be referred to as a statistical index part). The first, non-statistical reliability part could be skipped in alternative embodiments. The overall reliability index may comprise a product of these two index parts. Each of these parts has a value between zero and one. In this case, the first part effectively sets the reliability at zero in case of low count readings which are decomposed into photo/scatter pairs that fall outside of a pre-defined range or zone. For low-count readings within the pre-defined range or zone, the reliability index is additionally calculated in dependence upon the second reliability index part. Both parts are obtained using pre-computed lookup tables or functions which allow mapping of a multi-bin detector reading set for a given detector element to a reliability index. Each index part may be stored in a separate one or more lookup tables, or the overall reliability index, formed of both parts, may be stored in one or more lookup tables. Thus, to explain the method further, the process for pre-computing these mappings from the low-count reading to the reliability index will now be described.

For brevity, in the following explanation, the term 'reliable' will be used to refer to readings which are more consistent, or more likely to occur, based on the decomposed values which are obtained from them.

A first step is to identify in advance the group of detector count reading sets which fall into the category of low count readings. This group, g_{lc}, may be written formally as follows: ${g}_{lc} = \left\{\left.\left[c\left(1\right),c\left(2\right),…c\left({n}_{b}\right)\right]\right| {\sum }_{b = 1}^{{n}_{b}} c \left(b\right)<{T}_{low - count}\right\}$ (2) By way of illustration, for *n_{b}* = 5 and *T_{low-count}* = 40, the group *g_{lc}* contains 1,086,008 different low count reading sets. A typical value of the threshold T_{low-count} may be about 40 counts.

The pre-calculation of the mappings begins by decomposing each of these possible sets into a decomposed reading set using a pre-determined decomposition algorithm. By way of example, it may be decomposed into a photo/scatter value pair. The decomposition algorithm should be the same one that is to be used when processing the data 'on-line' after performing the low count correction. For simplicity, in some examples, the decomposition algorithm may be one which assumes zero cone and zero fan angles. In other words, the decomposition is performed assuming that all readings originate from the detector pixel which is approximately at the center of the detector array.

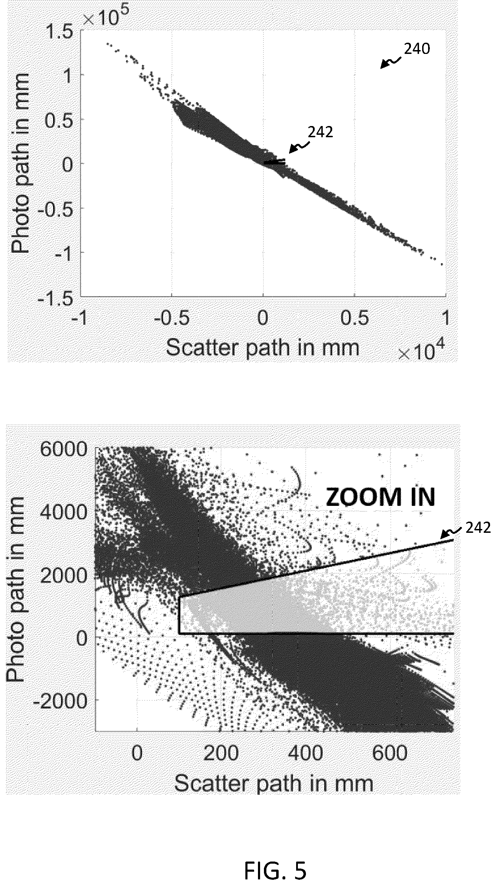

A next step is to assess a reliability of each low count reading combination based on a plausibility of the decomposed values obtained from the respective low count reading combination. This plausibility is decided manually by simply defining a range or zone of photo/scatter path combinations which are considered to be of acceptable or reasonable reliability. By way of illustration, Fig. 5 shows an example plot 240 of all of the decomposed photo/scatter component pairs for the full set g_{lc} of low count reading combinations. At the area 242 (shown more clearly in Fig. 5 (right)) is a defined range or zone of decomposed reading pairs which are considered to be plausible. The low count reading sets whose decomposed photo/scatter pairs are outside of the zone 242 are classified as unreliable. In the illustrated example, the vertical and lower horizontal border lines correspond to scatter path = 100mm and photo path = 100mm respectively. These were chosen based on the given current of the x-ray tube. The upper border line having a positive slope was chosen based on some a-priori knowledge regarding the zone of photo/scatter value pairs which make sense clinically.

It is noted that although in Fig. 5 almost all of the theoretically possible low-count combinations appear to have been excluded as non-reliable, in fact 56% of the low-count combinations having photo/scatter pairs which are within the defined reasonable zone 242. Furthermore, the low count combinations whose photo/scatter pairs are within the reasonable zone 242 occur more frequently within scan sinograms in actual clinical practice. For example, for an NCAT shoulder scan simulated at a tube current of 150 mA, it was found by the inventors that 70% of the low-count reading combinations present in the projection data for the scan fell within the borders of the reasonable zone 242.

A first reliability index component is defined ${r}_{v}^{ps}$, which takes a value between zero and 1: ${r}_{v}^{ps} ∈ \left[0 1\right]$. Low count reading sets whose decomposed photo/scatter value pairs are within the bounds of the defined reasonable zone/range 242 and far enough from its borders are assigned a value of 1. Low count reading sets whose decomposed photo/scatter value pairs are outside of the bounds of the defined reasonable zone/range 242 are assigned a value of 0. A smooth function may be defined at the boundary of the zone 242, and wherein low count reading sets within this boundary region are set a value between 0 and 1 in accordance with the function.

A second reliability index component, ${r}_{v}^{cdf}$, which takes a variable value between zero and 1 can be defined, based on use of a probability distribution for the low count readings. The final reliability index for each low count reading set can then be defined as the product of the first and second reliability indices, i.e. ${r}_{v} = {r}_{v}^{ps} ⋅ {r}_{v}^{cdf}$ (3) In some embodiments, the overall reliability index *rᵥ* may consist simply of the second reliability index component ${r}_{v}^{cdf}$ alone. However, preferred embodiments include both components.

This second reliability index component uses a cumulated distribution function (CDF). This is used to find the theoretical relative likelihood of the different low-count reading combinations, based on the decomposed photo/scatter values obtained from each of these readings. These likelihoods are again pre-computed in advance so that the index component ${r}_{v}^{cdf}$ can be looked up during execution of the low count correction method.

In particular, the pre-computing comprises, for each possible low-count reading set, decomposing the reading set using the decomposition algorithm to obtain the corresponding photo/scatter value pair. As the skilled person will appreciate, the photo/scatter values correspond to the equivalent path lengths, *lₚ, lₛ* through the scanned object represented by the respective contributions of the photo electric effect and the Compton scatter effect to the x-ray attenuation, based on assumed energy-dependent attenuation profiles *µₚ, µₛ* of the photoelectric and Compton scatter effects. From this, the theoretically expected detector count readings cₑₓₚ(b), for energy bins ∀*b* ∈ 1: *n_{b}* are computed for each low count reading set, based on the decomposed photo/scatter path pair, *lₚ, lₛ* for the low count reading set, as follows: ${c}_{exp} \left(b\right) = {\sum }_{E = {keV}_{min}}^{{keV}_{max}} {c}_{air} \left(E, b\right) ⋅ exp \left(-{l}_{p}⋅{μ}_{p}\left(E\right)-{l}_{s}⋅{μ}_{s}\left(E\right)\right) ∀ b ∈ 1 : {n}_{b}$ (4) Here, the index b runs over the set of energy bins (in this case more than two energy bins), E is the photon energy, cₐᵢᵣ(E, b) is the bin-dependent count reaching the central detector pixel during an air scan *lₚ, lₛ* are the decomposed photo/scatter equivalent path lengths for the given low count reading set, and *µₚ, µₛ* are the assumed energy-dependent attenuation profiles of the photoelectric and scatter mechanisms.

A vector can be defined, ${v}_{exp}^{c} = \left[{c}_{exp}\left(1\right), {c}_{exp}\left(2\right),…, {c}_{exp}\left({n}_{b}\right)\right]$ of the expected detector count readings for each pair of decomposed paths.

The n_{b}-dimensional Poisson probability distribution function (PDF), is next defined as follows: $\begin{matrix}{PDF}_{{v}_{exp}^{c}} \left({v}^{c}\right) = {\prod }_{b = 1}^{{n}_{b}} \frac{{\left({c}_{exp}\left(b\right)\right)}^{c \left(b\right)}}{c \left(b\right) !} exp \left(-{c}_{exp}\left(b\right)\right) ; \\ {v}^{c} ≡ \left[c\left(1\right),c\left(2\right),…,c\left({n}_{b}\right)\right]\end{matrix}$ (5) Here, c(b) is the original low-count reading set, whereas cₑₓₚ(b) is the computed expected low count reading set, back-computed from the decomposed photo/scatter value pair for c(b).

For every bin b, c(b) can take values between 0 and ∞. To simplify the calculation, the above-defined PDF can be replaced by a finite version. This is achieved by restricting c(b) (and therefore v^{c}) according to the well-known six-sigma range: $\begin{matrix}c \left(b\right) ∈ {c}_{min} \left(b\right) : {c}_{max} \left(b\right) ∀ b ∈ 1 : {n}_{b} ; \\ {c}_{min} \left(b\right) = max \left({c}_{exp}\left(b\right)-ceil\left(3⋅σ\right),0\right) , \\ {c}_{max} \left(b\right) = {c}_{exp} \left(b\right) + ceil \left(3⋅σ\right) \\ σ = \sqrt{{c}_{exp} \left(b\right)}\end{matrix}$ (6) Due to this new restriction on the range of c(b), the above PDF is no longer normalized correctly, and thus a normalization is applied as follows: $\begin{matrix}{PDF}_{{v}_{exp}^{c}}^{norm} \left({v}^{c}\right) = \frac{{PDF}_{{v}_{exp}^{c}} \left({v}^{c}\right)}{D} \\ D = {\sum }_{{v}^{c} \left|c\left(b\right)∈{c}_{min}\left(b\right):{c}_{max}\left(b\right)∀b∈1:{n}_{b}\right.} {PDF}_{{v}_{exp}^{c}} \left({v}^{c}\right)\end{matrix}$ (7)

The function ${PDF}_{{v}_{exp}^{c}}^{norm} \left({v}^{c}\right)$ may then be used to derive a likelihood of each original low-count reading set *v^{c}* ≡ [*c*(1), *c*(2), ... , *c*(*n_{b}*)].

This can be achieved using a cumulative distribution function as follows: $\begin{matrix}{CDF}_{{v}_{exp}^{c}}^{norm} \left({v}^{c}\right) = {\sum }_{v {′}^{c} ∈ {g}_{{v}_{exp}^{c} , {v}_{c}}} {PDF}_{{v}_{exp}^{c}}^{norm} \left(v{′}^{c}\right) \\ {g}_{{v}_{exp}^{c} , {v}_{c}} ≡ v {′}^{c} \left|{PDF}_{{v}_{exp}^{c}}^{norm}\left(v{′}^{c}\right)<{PDF}_{{v}_{exp}^{c}}^{norm}\left({v}^{c}\right)\right.\end{matrix}$ (8) ${CDF}_{{v}_{exp}^{c}}^{norm} \left({v}^{c}\right)$ gives the probability (between zero and one) that a random realization of integer noisy counts will have a likelihood to occur which is equal or smaller than the probability of the original low count reading. This derives in part from the equation (15) above which describes the likelihood for the generation of different integer noisy counts (from the expectation values *cₑₓₚ*(*b*)).

Using the above, the second reliability index part ${r}_{v}^{cdf}$ can be taken as ${CDF}_{{v}_{exp}^{c}}^{norm} \left({v}^{c}\right)$. By definition, ${r}_{v}^{cdf} ∈ \left[0 1\right]$. It describes the likelihood of each original low count combination *v^{c}*, given ${CDF}_{{v}_{exp}^{c}}^{norm}$, relative to other low count combinations fulfilling equation (17) above.

The value of ${r}_{v}^{cdf} = {CDF}_{{v}_{exp}^{c}}^{norm}$ can be determined in advance for each low count value set *v^{c}* in the group g_{lc}, and stored for example in a lookup table for retrieval during application of the smoothing method.

To illustrate the second part of the reliability index, ${r}_{v}^{cdf}$, two example low-count readings sets might be considered, as set out in Table 1 below:

**Table 1**

| Combination | c(1) | c(2) | c(3) | c(4) | c(5) | ${r}_{v}^{cdf}$ |
|---|---|---|---|---|---|---|
| a | 8 | 8 | 7 | 8 | 8 | 0.68 |
| b | 9 | 9 | 2 | 9 | 10 | 0.15 |

Both combinations in Table 1 contain 39 counts summed over the 5 energy bins.

While the sum of the two counts (a) and (b) are the same, it can be seen that in count set (b), the reading in the third bin is inconsistent with the readings in the rest of the bins. By contrast, in set (a), the counts are roughly consistent across the bins. Thus, it can be recognized intuitively that count set (b) is less plausible that count set (a). It can further be seen that this is reflected in the different values for the second reliability index component ${r}_{v}^{cdf}$, which is 0.68 for count set (a) and only 0.15 for count set (b).

Finally, the overall reliability index for each low-count reading can be defined, as previously stated, as ${r}_{v} = {r}_{v}^{ps} ⋅ {r}_{v}^{cdf}$.

The indices *rᵥ* can be stored in advance for each low count combination *v^{c}*.

As will be explained below, in operation, smoothing may be applied to low-count reading sets of obtained photon-count projection data with a smoothing strength determined in dependence upon the reliability index *rᵥ* for that low count reading set.

This method has the effect of reducing streak artefacts caused by anticorrelated noise without smearing the sinogram and the image. This can be understood from the fact that the lower is the reliability of a given low count reading set, the less frequently it presents in obtained sinograms. Therefore, applying smoothing strongly to only low-reliability reading sets causes only minimal smearing of the overall sinogram because low-reliability readings are relatively infrequent.

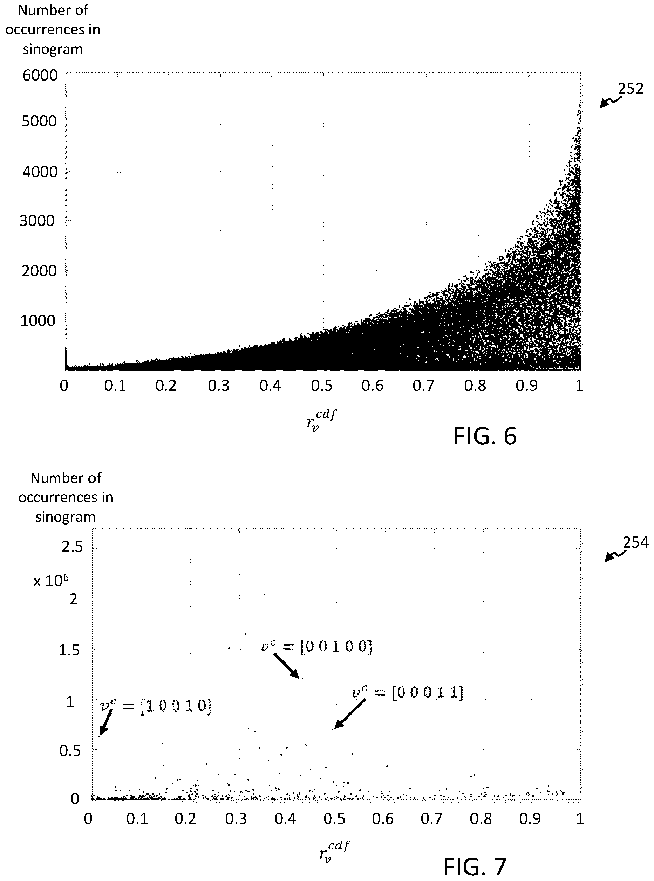

To illustrate this, Fig. 6 shows a scatter frequency distribution of low-count reading sets having different reliability indices ${r}_{v}^{cdf}$ within a sample sinogram obtained for a simulated NCAT shoulder scan. Each point on the plot is a low-count reading set; the x-axis is the reliability index ${r}_{v}^{cdf}$, and the y-axis is the occurrence/frequency rate in the sinogram. This plot shows only low-count readings whose sum is in the range between 30 and 39. It can be seen that the low count reading sets with low reliability index occur less frequently in the sinogram than those with high reliability index.

Fig. 7 shows a similar frequency plot for low-count reading sets whose sum is within the range between 0 and 9. The same trend between reliability and frequency is also present here, although less strongly. The reason for the less strong trend arises due to the fact that a high number of the low count readings in this range correspond to cases of strong photon starvation, where the sum over all bins is less than 5. The high occurrence of these outliers does not however impact on the efficiency of the low-count smoothing of the present set of embodiments because, in the presence of strong photon starvation, the corresponding projection data entries contain little useful information from the start.

Above has been described the process for pre-computing the reliability indices for each possible low-count reading set within a certain working range defined by group g_{lc}. These are stored in a datastore 230 and can be retrieved during execution of the method 200.

As discussed above, once the reliability index is obtained 216 for each low count reading set in the received projection sinogram, the method 200 further comprises tuning a smoothing kernel based on the reliability indices. In particular, the smoothing operator in this low count correction procedure is applied only to the low count readings in the projection dataset, and the strength of the smoothing is adjusted in dependence upon the reliability index, with stronger smoothing applied for lower reliability reading sets.

Tuning 218 of the smoothing kernel will now be explained further by way of an example.

For this example, r_{lc} represents a particular low count reading set in the projection dataset. The corresponding reliability index *rᵥ* is retrieved from a datastore for this reading set. A smoothing kernel is retrieved and its bins are determined based on a smoothing strength parameter rₛₘₛ whose value is set based on *rᵥ*.

Different options are possible for determining rₛₘₛ. One option is presented in the equation below: ${r}_{sms} = max \left(1-\frac{{r}_{v}}{{r}_{v}^{Th}},0\right) ∈ \left[0 1\right]$ (9) where ${r}_{v}^{Th}$ is a fixed threshold. By way of example, it may be set at a value of about 0.5, thereby guaranteeing that only readings for which ${r}_{v} < {r}_{v}^{Th}$ are smoothed. The bins of a smoothing kernel are then determined according to the value of rₒₘₛ.
An example for this smoothing kernel is now briefly discussed.

First, fixed smoothing weights are initially defined for all neighbor readings in the sinogram belonging to the 3x3x3 cube centered at the given reading satisfying ${r}_{v} < {r}_{v}^{Th}$ denoted by r₀. Here, the three dimensions are formed by the two dimensions of the sinogram, composed of the detector pixel columns and the sequence of data frames (i.e. the series of angular views of the projection dataset), and the third dimension is along the detector pixel rows.

Excluding the outlier reading r₀ itself, 26 fixed weights may thus be defined as follows: $\begin{matrix}{w}_{nn} \left({Δ}_{c}, {Δ}_{r}, {Δ}_{f}\right) = {w}_{nn} \left({Δ}_{c}\right) ⋅ {w}_{nn} \left({Δ}_{r}\right) ⋅ {w}_{nn} \left({Δ}_{f}\right) \\ {w}_{nn} \left({Δ}_{c}\right) = 1 - 0.2 ⋅ {δ}_{abs \left(Δc\right) , 1} , \\ {w}_{nn} \left({Δ}_{r}\right) = 1 - 0.2 ⋅ {δ}_{abs \left(Δr\right) , 1} , {w}_{nn} \left({Δ}_{f}\right) = 1 - 0.6 ⋅ {δ}_{abs \left(Δf\right) , 1} \\ w \left({Δ}_{c}, {Δ}_{r}, {Δ}_{f}\right) = \frac{{w}_{nn} \left({Δ}_{c}, {Δ}_{r}, {Δ}_{f}\right)}{{\sum }_{Δ c = - 1}^{1} {\sum }_{Δ r = - 1}^{1} {\sum }_{Δ f = - 1}^{1} w \left({Δ}_{c}, {Δ}_{r}, {Δ}_{f}\right) ⋅ {w}_{nn} \left({Δ}_{c}, {Δ}_{r}, {Δ}_{f}\right)} \\ w \left({Δ}_{c}, {Δ}_{r}, {Δ}_{f}\right) = \left(1-{δ}_{Δ c , 1}\right) ⋅ \left(1-{δ}_{Δ f , 1}\right) ⋅ \left(1-{δ}_{Δ r , 1}\right)\end{matrix}$ (10)

After defining the fixed weights, an adaptive weight for each neighbor is defined by *rᵥ* ∈ [0 1]. The final bins of the smoothing kernel are given as follows: $\begin{matrix}k \left({r}_{0}, m\right) = {Δ}_{c} = 0 & {Δ}_{r} = 0 & {Δ}_{f} = 0 ⇒ 1 - {r}_{v} \\ {Δ}_{c} \neq 0 \left|{Δ}_{r}\neq 0\right| {Δ}_{f} \neq 0 ⇒ {r}_{v} ⋅ w \left({Δ}_{c}, {Δ}_{r}, {Δ}_{f}\right)\end{matrix}$ (11)

The thus tuned smoothing kernel is then applied 220 to each low count reading set in the projection domain sinogram satisfying ${r}_{v} < {r}_{v}^{Th}$. In preferred embodiments, one or more additional steps may be taken to mitigate against potential introduction of bias, i.e., changing the mean count values in one or more sinogram regions. To avoid this possibility, it is possible to construct a correction operation comprising adding a correction to unreliable readings, and additionally compensating for the correction of each unreliable reading by modifying the counts of its neighbor readings. This modification may be a smaller count change amount than the correction itself, and with an opposite sign, for the purpose of minimizing any change in the mean values of the counts.

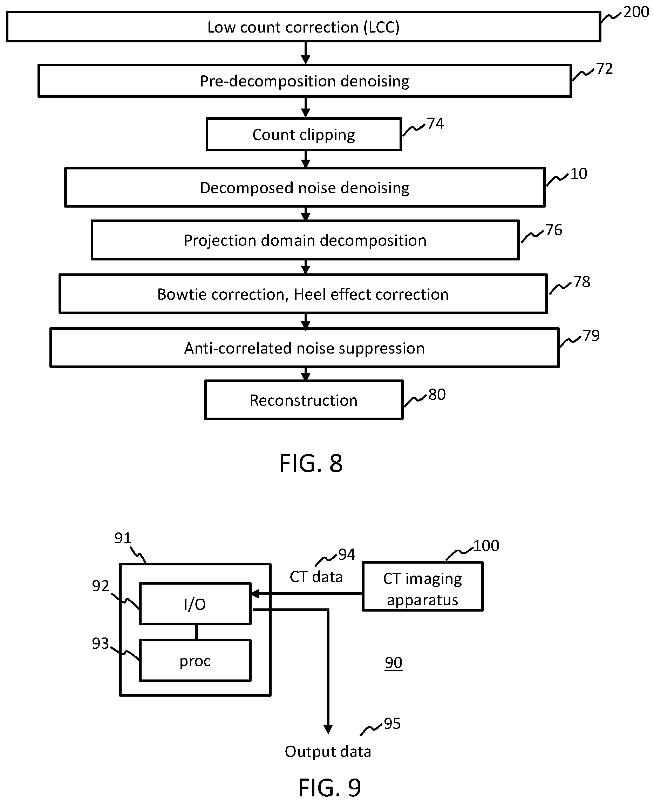

Fig. 8 shows a block diagram of a further method which represents an expanded version of the method of Fig. 4. The method of Fig. 8 includes additional optional pre-processing steps and post-processing steps.

The method comprises receiving a photon-count detector projection dataset. The photon counts may be calibrated by a gain-correction. The input may be in the form of a sinogram of detector count readings, where each reading contains the counts of n_{b} two-sided bins. Although if gain correction is applied, the input count values may deviate from integer numbers, using gain correction factors which are close to unity, the input counts can be considered as integers to a very good approximation. If the gain correction factors are not close enough to unity, the smoothing strength can still be found, based on the pre-calculations. However, to do it may require a multi-dimensional interpolation where the number of dimensions equals the number of energy bins.

The method comprises optionally applying 72 pre-decomposition projection domain denoising steps, for example the PDDN method mentioned earlier in this disclosure, and/or the a-VIPR method which is described in document "Comparison of ML iterative reconstruction and TV-minimization for noise reduction in CT images," K. M. Brown, S. Zabic, and T. Koehler, Proc. Fully 3D, pp. 443-446, (2011).

The method optionally further comprises applying 74 a count clipping procedure. Count clipping refers to filtering out count values outside of a certain range defined by upper and lower bounds. This excludes outlier count values that would otherwise result in erroneous decomposed values.

The method further comprises applying 76 the pre-determined projection domain decomposition algorithm. The decomposition algorithm may be any of a variety of different types of decomposition. The skilled person will be aware of methods for performing the decomposition. One approach is a polynomial regression approach. Another approach is a lookup table approach.

Optionally the method may further comprise application 78 of additional filtering or post-processing. For example, the method may comprise applying a bowtie effect filter, such as for example is described in the document US 2021/059633. The method may further comprise applying a heel effect filter, such as for example is described in the paper US 2008/317320.

The method optionally further comprises applying 79 a further post-decomposition filtering algorithm, such as a further anti-correlated noise filter. By way of example, one post-decomposition anticorrelated noise filter is described in the document US 2015/279005.

The method further comprises applying 80 a reconstruction algorithm, such as a filtered back projection reconstruction algorithm to reconstruct an imaging dataset.
Fig. 9 shows an example system 90 according to one or more embodiments. The system may be operable to perform the denoising method of Fig. 4.

The system comprises a processing arrangement 91 comprising an input/output 92 and one or more processors 93 connected to the input/output 92. The input/output is arranged for receiving CT projection data, for example from a CT imaging apparatus 100. Fig. 9 illustratively shows the input/output operably coupled with a CT imaging apparatus. The processing arrangement is adapted to perform any one or more of the methods described above.

The processing arrangement may in general comprise a single processor or a plurality of processors. It may be located in a single containing device, structure or unit, or it may be distributed between a plurality of different devices, structures or units. Reference therefore to the processing arrangement being adapted or configured to perform a particular step or task may correspond to that step or task being performed by any one or more of a plurality of processing components, either alone or in combination. The skilled person will understand how such a distributed processing arrangement can be implemented. The processing arrangement includes a communication module or input/output for receiving data and outputting data to further components.

The one or more processors of the processing arrangement can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method for use in reducing streaks of anti-correlated noise in decomposed spectral CT projection data, the decomposed spectral CT projection data being spectral CT projection data to which a pre-determined decomposition algorithm has been applied, and the streaks of anti-correlated noise being a noise component of the decomposed spectral CT projection data which arises upon application of the decomposition algorithm, the method comprising:
obtaining (210) a multi-energy photon counting CT projection dataset comprising a respective set of detection count readings for a set of energy bins, for each of an array of detector elements;
identifying (212) low-count reading sets by identifying sets of detection count readings for which the sum of the detection count readings across the bins is below a pre-defined threshold;
retrieving (214) a pre-computed reliability index for each identified low-count reading set, the reliability index corresponding to a pre-computed theoretical probability of obtaining the particular set of detector bin count values in the reading set;
retrieving and applying (220) a smoothing operator to the multi-energy projection dataset, the smoothing operator being applied only to the identified low count reading sets, wherein the strength of the smoothing operator for each reading set is adjusted (218) in dependence upon the reliability index derived for the reading, with stronger smoothing applied for lower reliability reading sets.

2. The method of claim 1,
wherein the reliability index comprises a product of a first and second component,
wherein the first component comprises the said pre-computed theoretical probability of obtaining the particular set of detector bin count values in the reading set; and
wherein the second component comprises a pre-computed reliability variable, indicative of a pre-determined plausibility of a decomposed value set obtained when said pre-determined decomposition algorithm is applied to the reading set.

3. The method of claim 2, wherein the second component has a value of 1 for low count readings whose corresponding decomposed value set is within a pre-defined plausibility range, and has a value of 0 for low count readings whose corresponding decomposed value set is outside of the pre-defined range.

4. The method of any of claims 1-3, further comprising:
applying the pre-determined decomposition algorithm to the smoothed projection dataset; and
applying a reconstruction algorithm to obtain reconstructed image data.

5. The method (10) of any of claims 1-4, wherein each set of decomposed values comprises values corresponding to contributions respectively of the photoelectric effect and Compton Scatter to x-ray attenuation.

6. A computer program product comprising computer program code configured, when run on a processor, to cause the processor to perform the method in accordance with any of claims 1-5.

7. A processing arrangement, comprising:
an input for obtaining a multi-energy CT projection dataset; and
one or more processors adapted to perform a method in accordance with any of claims 1-5 on the obtained multi-energy CT projection dataset.

8. A photon-counting CT system comprising the processing arrangement according to claim 7.

## Patentansprüche

1. Computerimplementiertes Verfahren zur Verwendung bei dem Reduzieren von Streifen aus antikorreliertem Rauschen in zerlegten spektralen CT-Projektionsdaten, wobei es sich bei den zerlegten spektralen CT-Projektionsdaten um spektrale CT-Projektionsdaten handelt, auf die ein vorbestimmter Zerlegungsalgorithmus angewendet wurde, und die Streifen aus antikorreliertem Rauschen eine Rauschkomponente der zerlegten spektralen CT-Projektionsdaten sind, die bei Anwendung des Zerlegungsalgorithmus entsteht, wobei das Verfahren Folgendes umfasst:
Erhalten (210) eines Multienergie-Photonenzähl-CT-Projektionsdatensatzes, der jeweils einen Satz von Detektionszählmesswerten für einen Satz von Energieintervallen für jedes eines Arrays von Detektorelemente umfasst;
Identifizieren (212) von Sätzen mit niedrigen Zählmesswerten durch Identifizieren von Sätzen von Detektionszählmesswerten, bei denen die Summe der Detektionszählmesswerten über die Intervalle hinweg unterhalb eines vordefinierten Schwellenwerts liegt;
Abrufen (214) eines vorberechneten Zuverlässigkeitsindex für jeden identifizierten Messwertsatz mit niedriger Zählrate, wobei der Zuverlässigkeitsindex einer vorberechneten theoretischen Wahrscheinlichkeit Wahrscheinlichkeit für Erhalten des besonderen Satzes von Detektor-Intervall-Zählwerten im Messwertsatz entspricht;
Abrufen und Anwenden (220) eines Glättungsoperators auf den Multi-Energie-Projektionsdatensatz, wobei der Glättungsoperator nur auf die identifizierten Messwertsätze mit niedriger Zählrate angewendet wird, wobei die Stärke des Glättungsoperators für jeden Messwertsatz in Abhängigkeit vom für den Messwert abgeleiteten Zuverlässigkeitsindex angepasst (218) wird, wobei eine stärkere Glättung für Messwertsätze mit geringerer Zuverlässigkeit angewendet wird.

2. Verfahren nach Anspruch 1,
wobei der Zuverlässigkeitsindex ein Produkt aus einer ersten und einer zweiten Komponente umfasst,
wobei die erste Komponente die vorberechnete theoretische Wahrscheinlichkeit für Erhalten des besonderen Satzes von Detektor-Intervall-Zählwerten im Messwertsatz umfasst; und
wobei die zweite Komponente eine vorberechnete Zuverlässigkeitsvariable umfasst, die eine vorbestimmte Plausibilität eines zerlegten Wertesatzes anzeigt, die erhalten wird, wenn der vorbestimmte Zerlegungsalgorithmus auf den Messwertsatz angewendet wird.

3. Verfahren nach Anspruch 2, wobei die zweite Komponente den Wert 1 für niedrige Zählmesswerte aufweist, deren entsprechender zerlegter Wertesatz innerhalb eines vordefinierten Plausibilitätsbereichs liegt, und den Wert 0 für niedrige Zählmesswerte aufweist, deren entsprechender zerlegter Wertesatz außerhalb des vordefinierten Bereichs liegt.

4. Verfahren nach einem der Ansprüche 1-3, ferner umfassend:
Anwenden des vorbestimmten Zerlegungsalgorithmus auf den geglätteten Projektionsdatensatz; und
Anwenden eines Rekonstruktionsalgorithmus zum Erhalten rekonstruierter Bilddaten.

5. Verfahren (10) nach einem der Ansprüche 1-4, wobei jeder Satz zerlegter Werte Werte umfasst, die jeweils den Beiträgen des photoelektrischen Effekts bzw. der Compton-Streuung zur Röntgenabschwächung entsprechen.

6. Computerprogrammprodukt, umfassend Computerprogrammcode, der so konfiguriert ist, dass er, wenn er auf einem Prozessor läuft, den Prozessor veranlasst, ein Verfahren nach einem der Ansprüche 1-5 durchzuführen.

7. Verarbeitungsanordnung, umfassend:
eine Eingabe zum Erhalten eines Multi-Energie-CT-Projektionsdatensatzes; und
einen oder mehrere Prozessoren, die geeignet sind, ein Verfahren nach einem der Ansprüche 1-5 auf dem erhaltenen Multi-Energie-CT-Projektionsdatensatz durchzuführen.

8. Photonenzähl-CT-System, das die Verarbeitungsanordnung nach Anspruch 7 umfasst.

## Revendications

1. Procédé mis en œuvre par ordinateur permettant de réduire des stries de bruit anti-corrélé dans des données de projection de TDM spectrale décomposées, les données de projection de TDM spectrale décomposées étant des données de projection de TDM spectrale auxquelles un algorithme de décomposition prédéterminé a été appliqué, et les traînées de bruit anti-corrélé étant une composante de bruit des données de projection de TDM spectrale décomposées qui apparaît lors de l'application de l'algorithme de décomposition, le procédé comprenant :
l'obtention (210) d'un ensemble de données de projection de TDM à comptage de photons multi-énergie comprenant un ensemble respectif de relevés de comptage de détection pour un ensemble de fenêtres d'énergie, pour chacun d'un réseau d'éléments détecteurs ;
l'identification (212) d'ensembles de relevés à faible comptage en identifiant des ensembles de relevés de comptage de détection pour lesquels la somme des relevés de comptage de détection à travers les fenêtres est inférieure à un seuil prédéfini ;
la récupération (214) d'un indice de fiabilité précalculé pour chaque ensemble de relevés à faible comptage identifié, l'indice de fiabilité correspondant à une probabilité théorique précalculée d'obtenir l'ensemble particulier de valeurs de comptage de fenêtre de détecteur dans l'ensemble de relevés ;
la récupération et l'application (220) d'un opérateur de lissage à l'ensemble de données de projection multi-énergie, l'opérateur de lissage étant appliqué uniquement aux ensembles de relevés à faible comptage identifiés, dans lequel la force de l'opérateur de lissage pour chaque ensemble de relevés est ajustée (218) en fonction de l'indice de fiabilité dérivé pour le relevé, un lissage plus fort étant appliqué aux ensembles de relevés de fiabilité inférieure.

2. Procédé selon la revendication 1,
dans lequel l'indice de fiabilité comprend un produit d'un premier et d'un second composant,
dans lequel le premier composant comprend ladite probabilité théorique précalculée d'obtenir l'ensemble particulier de valeurs de comptage de fenêtre de détecteur dans l'ensemble de relevés ; et
dans lequel le second composant comprend une variable de fiabilité précalculée, indicative d'une plausibilité prédéterminée d'un ensemble de valeurs décomposées obtenues lorsque ledit algorithme de décomposition prédéterminé est appliqué à l'ensemble de relevés.

3. Procédé selon la revendication 2, dans lequel le second composant présente une valeur de 1 pour les relevés à faible comptage dont l'ensemble de valeurs décomposées correspondant se trouve dans une plage de plausibilité prédéfinie, et présente une valeur de 0 pour les relevés à faible comptage dont l'ensemble de valeurs décomposées correspondant se trouve en dehors de la plage prédéfinie.

4. Procédé selon l'une quelconque des revendications 1-3, comprenant en outre :
l'application de l'algorithme de décomposition prédéterminé à l'ensemble de données de projection lissées ; et
l'application d'un algorithme de reconstruction pour obtenir des données d'image reconstruites.

5. Procédé (10) selon l'une quelconque des revendications 1-4, dans lequel chaque ensemble de valeurs décomposées comprend des valeurs correspondant respectivement aux contributions de l'effet photoélectrique et de la diffusion Compton à l'atténuation des rayons X.

6. Produit de programme informatique comprenant un code de programme informatique configuré, lorsqu'il est exécuté sur un processeur, pour amener le processeur à mettre en œuvre le procédé selon l'une quelconque des revendications 1-5.

7. Agencement de traitement, comprenant :
une entrée pour l'obtention d'un ensemble de données de projection TDM multi-énergie ; et
un ou plusieurs processeurs adaptés pour mettre en œuvre un procédé selon l'une quelconque des revendications 1-5 sur l'ensemble de données de projection TDM multi-énergie obtenu.

8. Système de TDM à comptage de photons comprenant l'agencement de traitement selon la revendication 7.
